# EUROPEAN PATENT APPLICATION

(11) **EP 3 147 199 A2**
(43) Date of publication of application: **29.03.2017**
(21) Application number: 16189920.8
(22) Date of filing: 21.09.2016
(51) Int. Cl.: B62M 11/02, F16D 13/38

(54) **STRADDLE-TYPE ELECTRIC VEHICLE**

(30) Priority: 28.09.2015 JP 2015190153
(71) Applicant: Yamaha Hatsudoki Kabushiki Kaisha, Shizuoka-ken Shizuoka 438-8501 (JP)
(72) Inventor: Ito, Jin, Shizuoka-ken, Shizuoka 438-8501 (JP); Shimizu, Tsukasa, Shizuoka-ken, Shizuoka 438-8501 (JP); Yoneda, Yuuichi, Shizuoka-ken, Shizuoka 438-8501 (JP); Fujiwara, Asaki, Shizuoka, Shizuoka 438-8501 (JP)
(74) Representative: Moreland, David

(57) **Abstract**

Both of an electric motor (30) and a clutch mechanism (50) are disposed on a drive shaft (11) of a vehicle. The electric motor (30) is disposed rightward from the middle in the vehicle width direction, while the clutch mechanism (50) and a sprocket are disposed leftward from the middle in the vehicle width direction. The clutch mechanism (50) is connected to a clutch lever so that the state of engagement of the clutch mechanism (50) is changed in response to an operation of the clutch lever. According to this straddle-type electric vehicle (1), it is possible to increase the degree of freedom in torque transmission control by a driver or rider, to increase an output torque of the electric motor (30) and to reduce the size of the clutch mechanism (50).

## Description

### CROSS-REFERENCE TO RELATED APPLICATION

The present application claims priority from Japanese application JP2015-190153 filed on 28 September 2015, the content of which is hereby incorporated by reference into this application.

### FIELD OF INVENTION

The present invention relates to a straddle-type electric vehicle, and particularly though not exclusively, to a straddle-type electric vehicle that is driven using an electric motor.

### BACKGROUND TO INVENTION

WO2011/080790 (S.M.R.E. S.r.l.) and Japanese Patent Laid-open Publication No. 2014-234131 (SUZUKI MOTOR CORP) disclose an electric motorcycle that utilizes an electric motor as a driving source. In the vehicle disclosed in WO2011/080790, a torque of the electric motor is transmitted to an output shaft through a clutch mechanism and a gear shift mechanism. The output shaft has a sprocket mounted thereon and linked to the axle of a driving wheel via a chain. In FIG. 5 of WO2011/080790, a clutch is disposed on the right side of the vehicle body. The electric motor and the sprocket are disposed on the left side of the vehicle body, and the sprocket is positioned behind the electric motor.

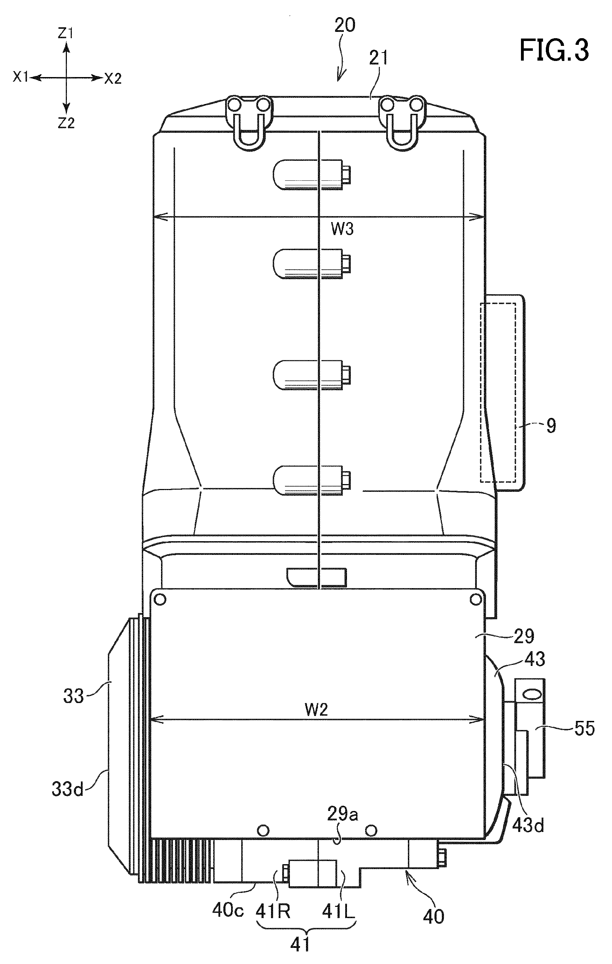

In the vehicle disclosed in Japanese Patent Laid-open Publication No.2014-234131, a torque of the electric motor is transmitted to an output shaft through a clutch mechanism. In FIG. 3 of Japanese Patent Laid-open Publication No.2014-234131, the electric motor is disposed on the right side of the vehicle body. The clutch mechanism and a sprocket mounted on the output shaft are disposed on the left side of the vehicle body. The sprocket is positioned behind the clutch mechanism.

In order to increase the torque output from the electric motor, it is effective to increase the diameter of the electric motor. However, in a structure disclosed in WO2011/080790 in which the electric motor and the sprocket are both disposed on the left side of the vehicle body, it is difficult to use an electric motor having a larger diameter because such a electric motor causes interference between the electric motor and the sprocket. Regarding this point, in a structure according to Japanese Patent Laid-open Publication No.2014-234131 in which an electric motor is disposed on the opposite side from the sprocket, an electric motor having a large diameter may be used without interference between the electric motor and the sprocket.

However, in Japanese Patent Laid-open Publication No.2014-234131, in which a centrifugal clutch mechanism is employed as a clutch mechanism, the state of engagement of the centrifugal clutch mechanism is automatically changed depending on the rotation speed of the electric motor irrespective of an operation by a driver. Accordingly, a driver or rider is required to adjust the torque transmitted to the driving wheel mainly through an acceleration operation as one is not able to adjust such through a clutch operation. Therefore, it is difficult for a driver or rider to achieve an operation of, for example, instantly disconnecting torque transmission to the driving wheel in accordance with his/her own intention.

According to WO2011/080790, as an intermediate shaft is disposed between the drive shaft having the electric motor mounted thereon and the output shaft having the sprocket mounted thereon, and the clutch mechanism is disposed on the intermediate shaft. A torque of the electric motor is increased by a speed reduction mechanism including a reduction gear on the driving shaft and a reduction gear that rotates integrally with the clutch mechanism before being inputted to the clutch mechanism. In this structure, since a large torque is transmitted by the clutch mechanism, it is necessary to employ a clutch mechanism having a large diameter.

The present invention has been conceived in view of the above. An object of at least one embodiment of at least one aspect of at least one aspect of the present invention is to provide a straddle-type electric vehicle that can increase the degree of freedom in torque transmission control by a driver, increase an output torque of an electric motor, and reduce the size of a clutch mechanism.

It is an object of at least one embodiment of at least one aspect of the present invention to obviate or at least mitigate one or more problems or disadvantages in the prior art.

### SUMMARY OF INVENTION

Various aspects of the present invention are defined in the independent claims appended hereto. Some optional and/or preferred features are defined in the dependent claims appended hereto.

According to an aspect of the present invention there is provided a straddle-type vehicle, such as a straddle-type electric vehicle. The vehicle may comprise a clutch operation member for operation by a driver or rider. The vehicle may comprise a drive shaft. The vehicle may comprise an electric motor, which may be mounted on the drive shaft, and/or disposed in a first direction from amiddle in a vehicle width direction. The vehicle may comprise a clutch mechanism which may be mounted on the drive shaft, and/or may be disposed in a second direction opposite to the first direction from the middle in the vehicle width direction, and/or may be connected to the clutch operation member, and/or may be configured to change a state of engagement of the clutch mechanism through an operation of the clutch operation member by the driver or rider. The vehicle may comprise a first gear which may be mounted on the drive shaft and/or may be configured to receive a torque of the electric motor through the clutch mechanism. The vehicle may comprise an output shaft which may be configured to receive the torque of the electric motor, e.g. through the first gear on the drive shaft. The vehicle may comprise and an output member which may be mounted on the output shaft, and/or may be disposed in the second direction from the middle in the vehicle width direction, and/or may be linked to a driving wheel of the vehicle, e.g. through a torque transmission member.

The clutch mechanism state of engagement can be changed through an operation of the clutch operation member. Thus, it may be possible to increase a degree of freedom in torque transmission control by a driver. Further, the electric motor may be disposed in the first direction from the middle in the vehicle width direction, while the clutch mechanism and the output member may be disposed in the second direction from the middle in the vehicle width direction. Accordingly, even when an electric motor having a large diameter is employed, interference may not be caused between the electric motor and the output member. This may make it possible to use an electric motor having a large output torque. Further, in the above described straddle-type electric vehicle, the electric motor and the clutch mechanism may be both mounted on the drive shaft. Therefore, a smaller torque may be transmitted by the clutch mechanism, compared to a structure in which, for example, a torque of an electric motor may be input to a clutch mechanism via a speed reduction mechanism. As a result, it may be possible to reduce the size of the clutch mechanism.

In a straddle-type electric vehicle according to the aforementioned aspect, a diameter of a motor housing that houses the electric motor may be larger than a diameter of a clutch cover that houses the clutch mechanism.

An intermediate shaft that constitutes a speed reduction mechanism may be disposed between the drive shaft and the output shaft.

The intermediate shaft may be supported by at least two bearings, and the at least two bearings may be positioned between the electric motor and the clutch mechanism in the vehicle width direction. With the above arrangement, it may be possible to shorten the distance between the intermediate shaft and the drive shaft, and it may thus be possible to reduce the size of the driving unit.

At least a part of the two bearings may overlap with both of the electric motor and the clutch mechanism in a side view of a vehicle body. With the above arrangement, the distance between the intermediate shaft and the drive shaft may be shortened, and it may thus be possible to reduce the size of the driving unit.

The intermediate shaft may comprise a second gear that may be directly or indirectly engaged with the first gear on the drive shaft, and a third gear that may have a diameter smaller than that of the second gear and which may be directly or indirectly engaged with a gear on the output shaft. The intermediate shaft may be supported by two bearings. The second gear and the third gear on the intermediate shaft may be positioned between the two bearings. With the above arrangement, a sufficient distance between the two bearings that support the intermediate shaft can be secured. Therefore, it may be easier to support the two bearings by two half case sections that are combined to each other in the vehicle width direction to form the cases of the driving units.

At least a part of the output member may overlap with a motor housing that stores the electric motor in a side view of a vehicle body.

The vehicle may further comprise a motor driving device comprising an inverter and may be configured to supply an electric power to the electric motor. The motor driving device may be disposed ahead of the electric motor and the clutch mechanism. The motor driving device may overlap with at least a part of the electric motor and at least a part of the clutch mechanism in a front view of a vehicle body. With the above, the distance between the electric motor and the motor driving device may be shortened, and it may thus be possible to shorten a wiring that connects these. Further, since the motor driving device receives more wind (air intake) while the vehicle is running, it may be possible to effectively cool the motor driving device.

The vehicle may further comprise a battery configured to store an electric power to be supplied to the electric motor, and may comprise a battery case that stores the battery. The drive shaft, the electric motor, the clutch mechanism, the output shaft, and the motor driving device may be disposed below the battery case. The motor driving device may be positioned further rearward than a front end of the battery case, and the output shaft may be positioned further forward than a rear end of the battery case. With the above, it may be possible to prevent the driving unit from becoming large in the size in the front-back direction.

The vehicle may further comprise a battery configured to store an electric power to be supplied to the electric motor, and a battery case that stores the battery. The drive shaft, the electric motor, the clutch mechanism, and the output shaft may be disposed below the battery case. The drive shaft, the electric motor, the clutch mechanism, and the output shaft may be disposed in the driving unit case, and a width of the battery case may be smaller than a width of the driving unit case at a position of the drive shaft. With the above, when a driver or rider straddles the vehicle body, the battery case may be readily positioned between both his/her legs.

The vehicle may further comprise a motor driving device comprising an inverter and configured to supply an electric power to the electric motor. The drive shaft, the electric motor, the clutch mechanism, the output shaft and the motor driving device may be disposed in a driving unit case. The driving unit case may have a first housing space in which the clutch mechanism and the output shaft are disposed and a second housing space in which the electric motor and the motor driving device are disposed, and the first housing space and the second housing space may be defined by a wall portion formed in the driving unit case. With the above, since the motor driving device is stored in the driving unit case, it is possible to shorten the wiring between the motor driving device and the electric motor. Further, since the first housing space and the second housing space are defined, it is possible to supply oil to a device disposed in the first housing space and also to prevent the oil from touching the electric motor and the motor driving device disposed in the second housing space.

The second housing space may have a motor housing space in which the electric motor may be disposed and a driving device housing space in which the motor driving device may be disposed. The driving unit case may have an opening formed on a part thereof for communication between the driving device housing space and the motor housing space. With the above arrangement, it may be possible to electrically connect the electric motor and the motor driving device through the opening formed on the driving unit case. The drive shaft, the electric motor, the clutch mechanism, and the output shaft may be disposed in a driving unit case. The driving unit case may comprise a case main body and a motor housing that has a motor housing space for housing the electric motor. The motor housing may be fixed to the case main body. With the above arrangement, it may be possible to reduce the width of the driving unit case in the vehicle width direction, compared to a structure in which, for example, another member is disposed between the motor housing and the case main body.

The clutch mechanism may comprise a plurality of first clutch plates that rotate integrally with the drive shaft, a plurality of second clutch plates that are alternately arranged with the plurality of first clutch plates and rotates integrally with the first gear on the drive shaft, and a pressure plate that may be movable in a shaft direction of the drive shaft in response to an operation of the clutch operation member by a driver, and presses the plurality of first clutch plates and the plurality of second clutch plates to each other.

At least one of the first gear on the drive shaft and the clutch mechanism may have an engagement portion that projects in a shaft direction of the drive shaft and is engaged with the other of the first gear and the clutch mechanism. With the above, it is possible to make smaller the diameter of the first gear, compared to a structure in which, for example, the first gear and the clutch mechanism are engaged with each other using a spline or a projecting portion projecting in the radial direction of the drive shaft. As a result, it is possible to ensure a sufficient reduction ratio while shortening the distance between the drive shaft to the output shaft, that is, while reducing the size of the driving unit.

The drive shaft may have a fan mounted thereon for cooling the electric motor. With the above, it is possible to improve cooling capability of the electric motor.

It will be appreciated that features analogous to those described in relation to the above aspect or optional features may be individually and separably or in combination applicable to any of the other aspects or optional features.

### BRIEF DESCRIPTION OF DRAWINGS

An embodiment of the present invention will now be described by way of example only, with reference to the accompanying drawings, which are:
- **FIG. 1**: a side view of an electric motorcycle which is one example of a straddle-type electric vehicle;
- **FIG. 2**: a side view showing a battery case and a driving unit case;
- **FIG. 3**: a front view showing a battery case and a driving unit case;
- **FIG. 4**: a perspective view of a driving unit case;
- **FIG. 5**: a perspective view of a driving unit case with an electric motor removed from the driving unit case;
- **FIG. 6**: a side view of a driving unit case;
- **FIG. 7**: a cross-sectional view along the line VII-VII in FIG. 6;
- **FIG. 8**: a cross-sectional view along the line VIII-VIII in FIG. 6;
- **FIG. 9**: a cross-sectional view along the line IX-IX in FIG. 6; and
- **FIG. 10**: a perspective view showing a clutch mechanism and a first gear.

### DETAILED DESCRIPTION OF EMBODIEMNTS

An embodiment of the present invention will now be described, by way of example only, with reference to the accompanying drawings. It will be appreciated that the present invention is not limited to the following embodiment.

In the following, a straddle-type electric vehicle according to one embodiment of the present invention will be described. In this specification, an electric motorcycle 1 will be described as one example of a straddle-type electric vehicle. The present invention may be applied to a straddle-type automobile or a straddle-type automotive vehicle, or a straddle-type tricycle.

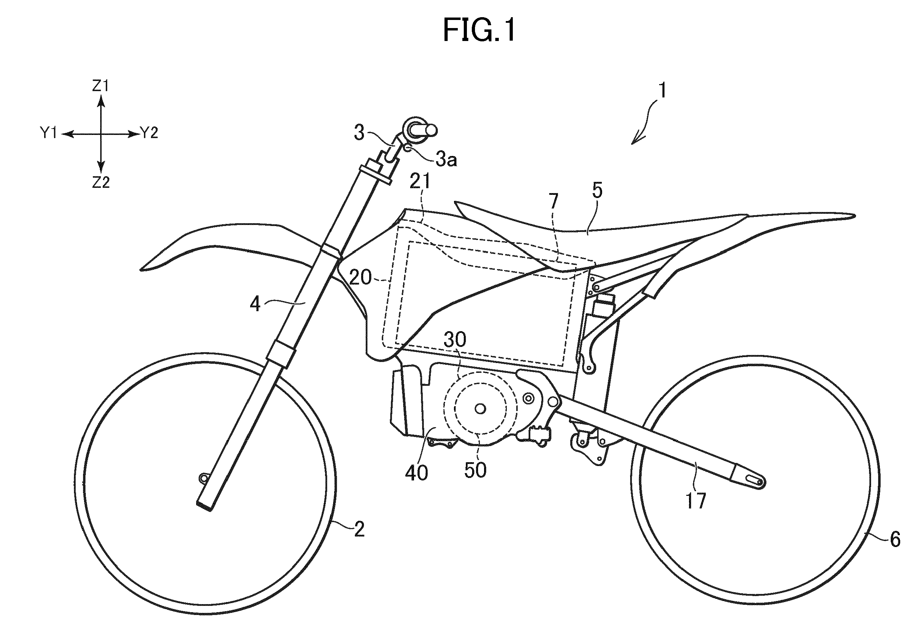

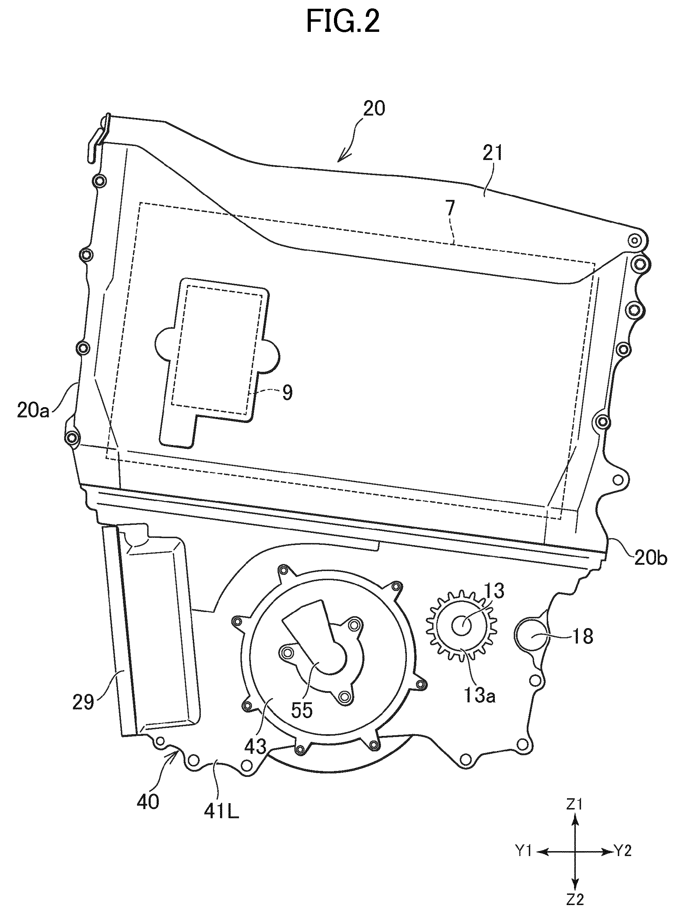

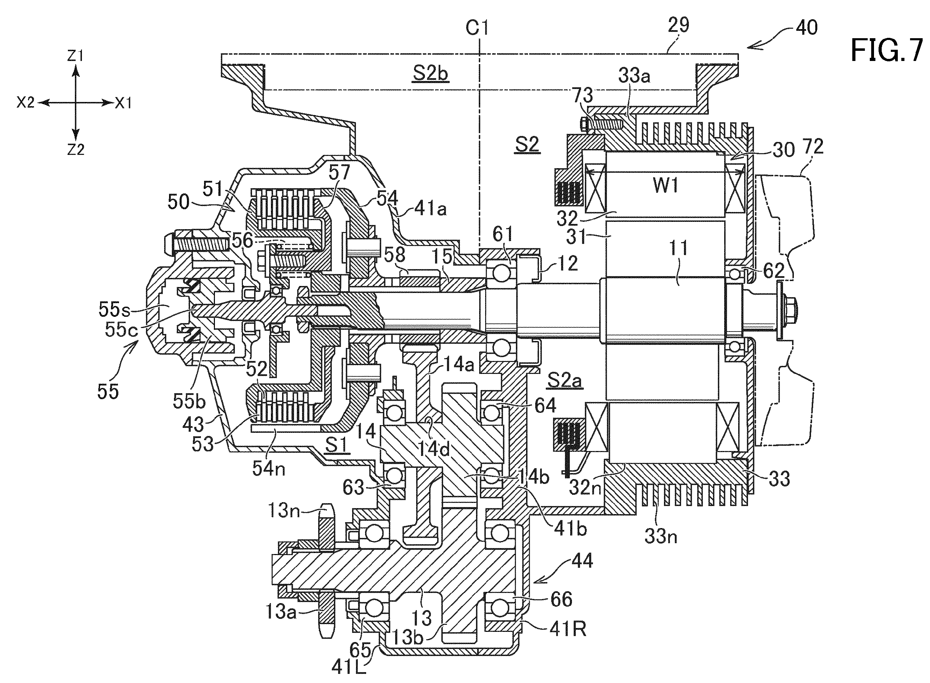

FIG. 1 is a side view of an electric motorcycle 1. FIGS. 2 and 3 show a battery case 20 and a driving unit case 40 equipped to the electric motorcycle 1. FIG. 2 is a side view, and FIG. 3 is a front view. In the description below, the arrows Y1 and Y2 shown in these diagrams indicate the forward and rearward directions, respectively, of the vehicle, those X1 and X2 as the rightward and leftward directions, respectively, of the vehicle, and those Z1 and Z2 as the upward and downward directions, respectively, of the vehicle. The direction indicated by the arrows X1-X2 is referred to as the vehicle width direction or the shaft direction of the drive shaft 11 (see FIG. 7).

As shown in FIG. 1, the electric motorcycle 1 has a front wheel 2 and a steering handle 3 for steering the front wheel 2. The steering handle 3 is connected to the front wheel 2 via a front fork 4. The electric motorcycle 1 comprises a seat 5 which a driver can straddle. The electric motorcycle 1 comprises a rear wheel 6 and an electric motor 30 for driving the rear wheel 6. The rear wheel 6 is supported by rear arms 17 so as to move in the up-down direction. The electric motorcycle 1 comprises a battery 7 that stores an electric power to be supplied to the electric motor 30 and a battery case 20 for housing the battery 7. The battery case 20 may have, in the upper portion thereof, a cover 21 that can be opened and closed (see FIG. 2). The battery 7 may be able to be taken out of the battery case 20 when the cover 21 is opened.

In the disclosed example of the electric motorcycle 1, the battery case 20 is disposed below the seat 5, and the electric motor 30 is disposed below the battery case 20. The electric motor 30 is disposed in the driving unit case 40. As is to be described later, a clutch mechanism 50 is disposed in the driving unit case 40 (see FIG. 7). A clutch lever 3a for a driver to operate the state of engagement of the clutch mechanism 50 is provided to the steering handle 3 (the clutch lever 3a corresponds to a "clutch operation member" in the claims").

As shown in FIG. 2, a low voltage battery 9 for supplying an electric power to a light, a control device (not shown) that controls the electric motor 30 or the like may be disposed inside the battery case 20. The low voltage battery 9 outputs a voltage lower than the voltage outputted by the battery 7. Layout of the low voltage battery 9 is not limited to the above descried. For example, the low voltage battery 9 may be disposed in a position apart from the battery case 20 at the rear of the vehicle body.

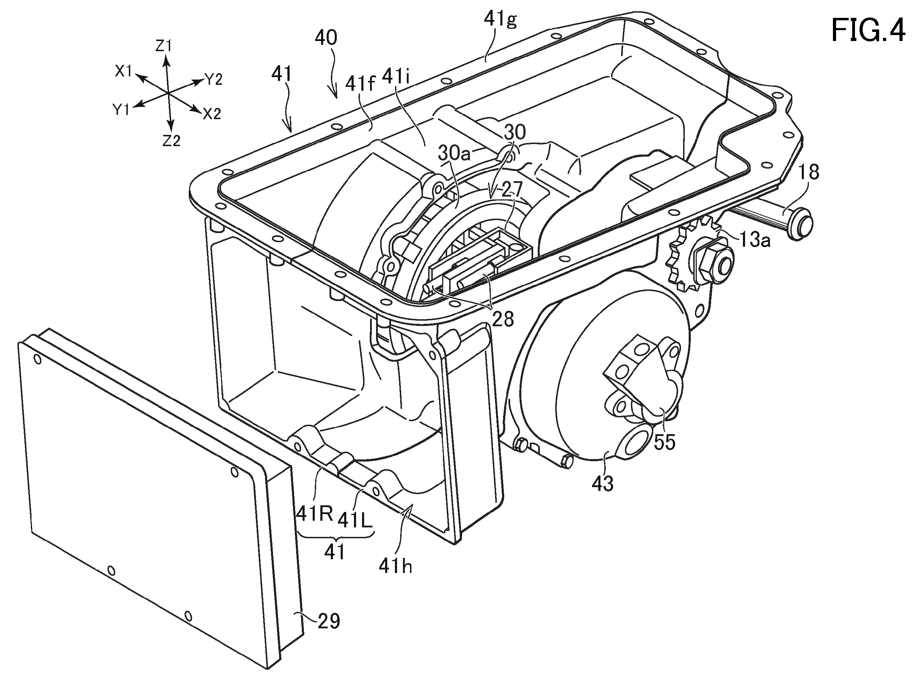

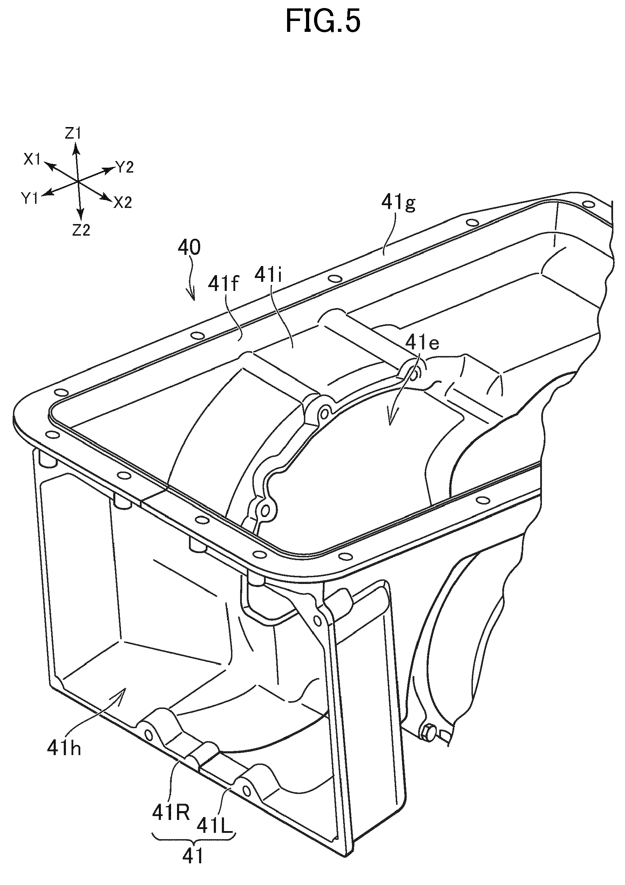

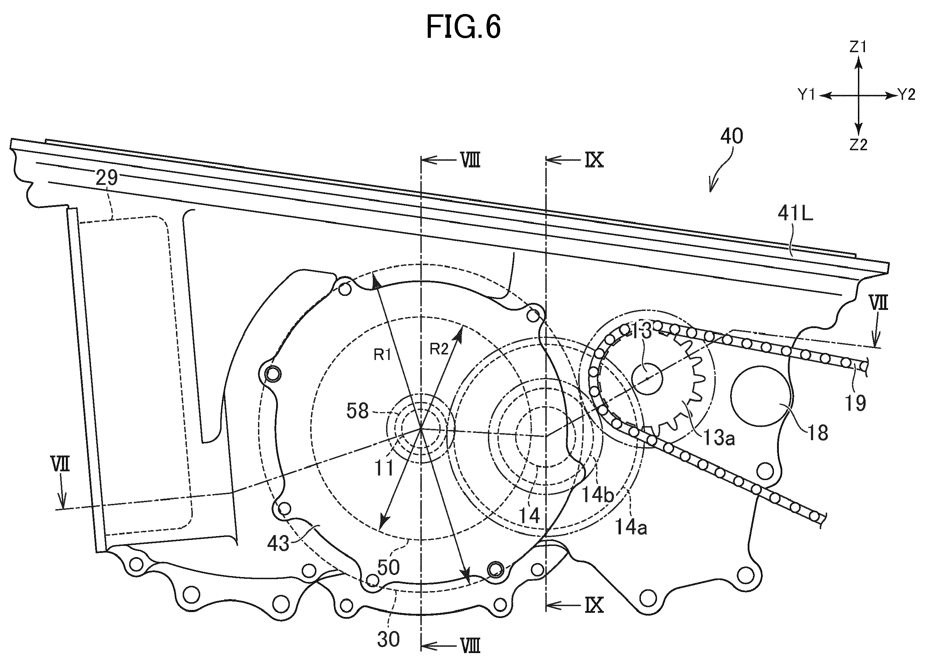

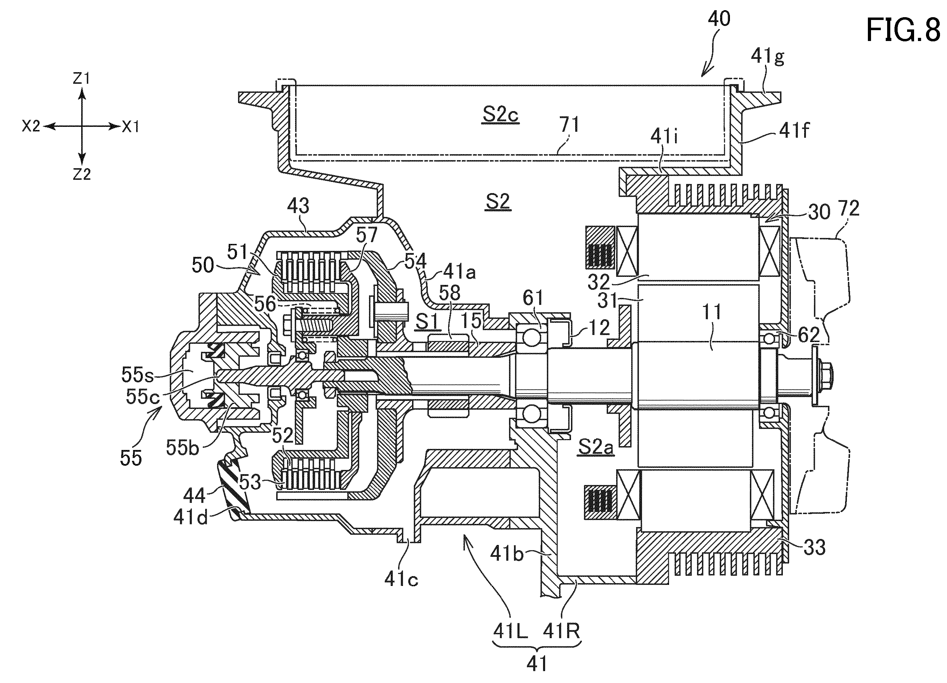

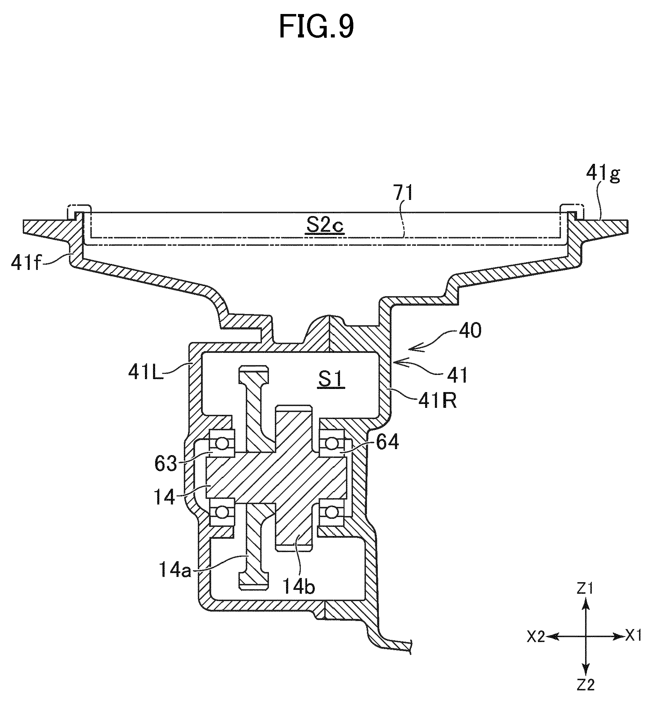

FIGS. 4 and 5 are perspective views of the driving unit case 40. In FIG. 5, the electric motor 30 is removed from the driving unit case 40. FIG. 6 is a side view of the driving unit case 40. In FIG. 6, the driving unit stored in the driving unit case 40 is shown by a broken line, and a hydraulic unit 55 to be described later is omitted (the "driving unit" includes the electric motor 30, the clutch mechanism 50, an intermediate shaft and an output shaft to be described later). FIGS. 7, 8, and 9 are cross-sectional views of the driving unit case 40. FIG. 7 is a cross-sectional view along the line VII-VII in FIG. 6. FIG. 8 is a cross-sectional view along the line VIII-VIII in FIG. 6. FIG. 9 is a cross sectional view along the line IX-IX in FIG. 6.

As shown in FIG. 7, in the driving unit case 40, the drive shaft 11, the electric motor 30, and the clutch mechanism 50 are disposed.

As shown in FIG. 7, the electric motor 30 is mounted on the drive shaft 11. The electric motor 30 receives an electric power from the battery 7, and generates a torque for rotating the drive shaft 11. The electric motor 30 has a rotor 31 that rotates integrally with the drive shaft 11 and a stator 32 fixed to the vehicle body for receiving an electric power from the battery 7 and causing the rotor 31 to rotate. In the disclosed example of the electric motor 30, the stator 32 is fixed to a motor housing 33 to be described later that constitutes a part of the driving unit case 40. The electric motor 30 is, for example, a radial gap motor. That is, the stator 32 is positioned outside relative to the rotor 31 in the radial direction of the drive shaft 11 and surrounds the outside of the rotor 31. The electric motor 30 may be, for example, an axial gap motor in which a stator is positioned opposed to a rotor in the shaft direction of the drive shaft 11. As shown in FIG. 7, a fan 72 for cooling the electric motor 30 may be mounted on an end portion of the drive shaft 11. The fan 72 is positioned outside from the electric motor 30 in the vehicle width direction. The fan 72 rotates integrally with the drive shaft 11 to send outside air to the electric motor 30 (in detail, send outside air to the lateral surface of the motor housing 33).

As shown in FIG. 7, the clutch mechanism 50 is mounted on the drive shaft 11, similar to the electric motor 30. The clutch mechanism 50 has a driving member that rotates integrally with the drive shaft 11 and a driven member that can rotate relative to the driving member and the drive shaft 11 and receive a torque (rotation) from the driving member through engagement with the driving member.

The clutch mechanism 50 is, for example, a multiple disk clutch mechanism. That is, the driven member of the clutch mechanism 50 has a plurality of first clutch plates 53 and a clutch housing 54 that rotates integrally with the plurality of first clutch plates 53. The first clutch plates 53 and the clutch housing 54 rotate integrally with a first gear 58 on the drive shaft 11. The driving member of the clutch mechanism 50 has a plurality of second clutch plates 52 and a clutch inner 51 that are disposed inside the clutch housing 54 and rotate integrally with the drive shaft 11. The plurality of first clutch plates 53 and the plurality of second clutch plates 52 are alternately disposed in the shaft direction of the drive shaft 11. The clutch mechanism 50 has a pressure plate 57 that can move in the shaft direction of the drive shaft 11 in response to an operation of the clutch lever 3a and presses the first clutch plate 53 and the second clutch plates 52 to each other. In an example of the clutch mechanism 50, the pressure plate 57 presses the first clutch plate 53 and the second clutch plates 52 to each other by utilizing an elastic force of a clutch spring 56.

As described above, the first gear 58 that can rotate relative to the drive shaft 11 is mounted on the drive shaft 11. The first gear 58 receives a torque (rotation) of the electric motor 30 via the clutch mechanism 50. That is, the first gear 58 rotates integrally with the driven member (more specifically, the clutch housing 54) of the clutch mechanism 50. As shown in FIG. 7, an output shaft 13 for receiving a torque of the electric motor 30 via the first gear 58 is additionally provided in the driving unit case 40. In the example of the electric motorcycle 1, the torque of the electric motor 30 is transmitted to the output shaft 13 via an intermediate shaft 14. A sprocket 13a is mounted on the output shaft 13 (the sprocket 13a corresponds to an "output member" in claims). The sprocket 13a is linked to the driving wheel of the electric motorcycle 1, that is, linked to the rear wheel 6, via a chain 19 (see FIG. 6), and the rotation of the sprocket 13a (a torque from the electric motor 30) is transmitted to the rear wheel 6 via the chain 19. Note that a pulley may be provided as the "output member" instead of the sprocket 13a on the output shaft 13. Then, a belt may be used instead of the chain 19 as a torque transmission member for transmitting a torque (rotation) to the rear wheel 6. A bevel gear may be provided as the "output member" on the output shaft 13, instead of the sprocket 13a, and a shaft may be used as the torque transmission member instead of the chain 19.

As shown in FIG. 7, the electric motor 30 is disposed rightward from the middle C1 in the vehicle width direction. Meanwhile, the clutch mechanism 50 and the sprocket 13a are disposed leftward from the middle C1 in the vehicle width direction. With this layout, even when an electric motor 30 having a large diameter is employed, the electric motor 30 does not interfere with the sprocket 13a. Therefore, it is possible to increase the output torque of the electric motor 30 without increasing the width of the electric motor 30 in the shaft direction of the drive shaft 11. In the example of the electric motorcycle 1, the electric motor 30 has a diameter R1 (see FIG. 6) that is larger than the width W1 (see FIG. 7) in the shaft direction of the drive shaft 11, that is, in the vehicle width direction. As described above, the electric motor 30 and the clutch mechanism 50 are both mounted on the drive shaft 11. With the above, a smaller torque is inputted to the clutch mechanism 50, compared to a structure in which, for example, a torque of an electric motor is inputted to a clutch mechanism via a speed reduction mechanism. As a result, it is possible to reduce the size of the clutch mechanism 50. Therefore, it is possible to shorten the distance between the drive shaft 11 and the output shaft 13, and thus one can reduce the size of the driving unit case 40.

In the example of the electric motorcycle 1, as shown in FIG. 6, the diameter R1 of the electric motor 30 is larger than the diameter R2 of the clutch mechanism 50 (note here that the diameter R1 of the electric motor 30 is the outside diameter of the stator 32, and the diameter R2 of the clutch mechanism 50 is the outside diameter of the clutch housing 54). As a result, the outside diameter of the motor housing 33 as well is larger than the outside diameter of a clutch cover 43 disposed outward from the clutch mechanism 50 in the vehicle width direction and covering the clutch mechanism 50. As shown in FIGS. 6 and 7, the sprocket 13a is positioned behind the clutch mechanism 50 and the clutch cover 43 in a side view and a cross-section.

As the clutch mechanism 50 is connected to the clutch lever 3a so that the state of engagement of the clutch mechanism 50 is changed in response to an operation of the clutch lever 3a. That is, it is possible to change the state of engagement of the driving member and the driven member of the clutch mechanism 50 through operation of the clutch lever 3a by a driver relative. With the above, it is possible to increase the degree of freedom in torque transmission control by a driver, compared to a centrifugal clutch in which the state of engagement is automatically changed depending on the rotation speed of the electric motor. For example, a driver can instantly disconnect torque transmission to the rear wheel 6 by operating the clutch lever 3a. Moreover, it is possible to instantly obtain a large driving torque by rapidly engaging the clutch mechanism 50 while the electric motor 30 is outputting a large torque.

In the example of the electric motorcycle 1, the clutch lever 3a is mechanically connected to the clutch mechanism 50. More specifically, the clutch lever 3a is connected to the hydraulic unit 55 of the clutch mechanism 50 (see FIGS. 4 and 7) via a hydraulic hose (not shown). As shown in FIG. 7, the hydraulic unit 55 has, inside thereof, a cylinder 55s for receiving oil through a hydraulic hose. The cylinder 55s has a piston 55b that is movable in the shaft direction of the drive shaft 11 is provided. The clutch mechanism 50 comprises a rod 55c that is movable in the shaft direction of the drive shaft 11 together with the piston 55b. The rod 55c is movable in the shaft direction of the drive shaft 11 together with the pressure plate 57. When the pressure inside the cylinder 55s increases as the clutch lever 3a is operated, the rod 55c presses the pressure plate 57 in such a direction that causes the clutch inner 51 and the pressure plate 57 to depart from each other. The pressure plate 57 is pressed by the clutch spring 56 in such a direction that causes the pressure plate 57 to approach the clutch inner 51.

The clutch lever 3a may be connected to the clutch mechanism 50 via a wire, instead of the hydraulic hose. Alternatively, the clutch lever 3a may be electrically connected to the clutch mechanism 50. For example, an actuator for moving the pressure plate 57 may be provided to the clutch mechanism 50, and the actuator may be electrically connected to the clutch lever 3a via a harness or a control device. Then, the state of engagement of the clutch mechanism 50 may be operated through operation of the actuator.

The first gear 58 on the drive shaft 11 is positioned between the electric motor 30 and the clutch mechanism 50 in the vehicle width direction. As shown in FIG. 7, the intermediate shaft 14 that constitutes a speed reduction mechanism is disposed between the drive shaft 11 and the output shaft 13 on the torque transmission path. That is, rotation (torque) of the electric motor 30 is transmitted to the output shaft 13 via the intermediate shaft 14.

As shown in FIG. 6, in the disclosed example of the electric motorcycle 1, the drive shaft 11 and the intermediate shaft 14 are located at a position lower than the output shaft 13 in a side view of the driving unit case 40. With the above, it is possible to achieve low barycenter of the vehicle body. Further, with the above structure, the distance between the drive shaft 11 and the output shaft 13 in the front-back direction can be shortened, and thus it is possible to reduce the size of the driving unit case 40. In a side view of the driving unit case 40, the intermediate shaft 14 is positioned further rearward than the drive shaft 11 and further frontward than the output shaft 13. The positional relationship between the drive shaft 11, the intermediate shaft 14, and the output shaft 13 is not limited to the example shown in FIG. 6, and may be desirably changed.

A pivot shaft 18 supporting the front end portion of the rear arm 17 is located behind the output shaft 13 (see FIG. 4). The pivot shaft 18 is supported by a case main body 41 to be described later that constitutes the driving unit case 40.

As shown in FIG. 7, a second gear 14a that rotates integrally with the first gear 58 and a third gear 14b of which diameter is smaller than that of the second gear 14a are mounted on the intermediate shaft 14. The third gear 14b rotates integrally with a gear 13b on the output shaft 13 (the gear 13b on the output shaft 13 will be hereinafter referred to as a fourth gear). In the disclosed example of the electric motorcycle 1, the second gear 14a is engaged with the first gear 58, and the third gear 14b is engaged with the fourth gear 13b on the output shaft 13. Instead of these, the second gear 14a on the intermediate shaft 14 may be indirectly engaged with the first gear 58 on the drive shaft 11 (that is, the rotation of the first gear 58 may be transmitted to the second gear 14a via another shaft and another gear). The third gear 14b on the intermediate shaft 14 may be indirectly engaged with the fourth gear 13b on the output shaft 13. Rotation of the drive shaft 11 is decelerated by the gears 58, 14a, 14b, 13b before being transmitted to the output shaft 13.

As shown in FIG. 7, the intermediate shaft 14 is supported by two bearings 63, 64. The bearings 63, 64 are positioned between the clutch mechanism 50 and the electric motor 30 in the vehicle width direction. That is, the bearings 63, 64 are positioned closer to the electric motor 30 than the end portion of the clutch mechanism 50 on the side of the middle C1 in the vehicle width direction. Further, the bearings 63, 64 are positioned closer to the clutch mechanism 50 than the end portion of the electric motor 30 on the side of the middle C1 in the vehicle width direction. In other words, the entire intermediate shaft 14 is positioned closer to the electric motor 30 than the end portion of the clutch mechanism 50 on the side of the middle C1 in the vehicle width direction, and closer to the clutch mechanism 50 than the end portion of the electric motor 30 on the side of the middle C1 in the vehicle width direction. With the above arrangement, it is possible to shorten the distance between the drive shaft 11 and the intermediate shaft 14, and resultantly to reduce the size of the driving unit case 40.

In the disclosed example of the electric motorcycle 1, as shown in FIG. 7, a part of each bearing 63, 64 (a front portion of each bearing 63, 64) is positioned more forward than the rear end of the clutch mechanism 50, that is, positioned more forward than the rear end 54n of the clutch housing 54 in the example of the electric motorcycle 1. Thus, a part of each bearing 63, 64 overlaps with the clutch mechanism 50 in a side view of the driving unit case 40. With the above arrangement, the distance between the intermediate shaft 14 and the drive shaft 11 can be shortened, which makes it possible to reduce the size of the driving unit. As shown in FIG. 7, a part (the front surface 14d) of the intermediate shaft 14 as well may be positioned more forward than the rear end 54n of the clutch mechanism 50. Further, instead of the example shown in FIG. 7, each bearing 63, 64 may be arranged so as to entirely overlap with the clutch mechanism 50 in a side view of the driving unit case 40.

As shown in FIG. 7, each bearing 63, 64 is positioned more forward than the rear end of the electric motor 30, that is, the rear end 32n of the stator 32. Thus, each bearing 63, 64 overlaps with the electric motor 30 in a side view of the driving unit case 40. In the example of the electric motorcycle 1, each bearing 63, 64 entirely overlap with the electric motor 30 in a side view of the driving unit case 40. Alternatively, each bearing 63, 64 may only partially (the front portion) overlap with the electric motor 30 in a side view of the driving unit case 40.

The distance between the intermediate shaft 14 and the drive shaft 11 results in shorter, as described above, and resultantly, it is possible to shorten the distance between the drive shaft 11 and the output shaft 13. Then, in the disclosed example of the electric motorcycle 1, a part (the front end portion 13n) of the sprocket 13a is positioned more forward than the rear end 33n of the motor housing 33, as shown in FIG. 7. As a result, the sprocket 13a partially overlaps with the motor housing 33 in a side view of the vehicle body. The arrangement of the sprocket 13a is not necessarily limited to the example of the electric motorcycle 1, and the sprocket 13a may be positioned more rearward than the rear end 33n of the motor housing 33, for example.

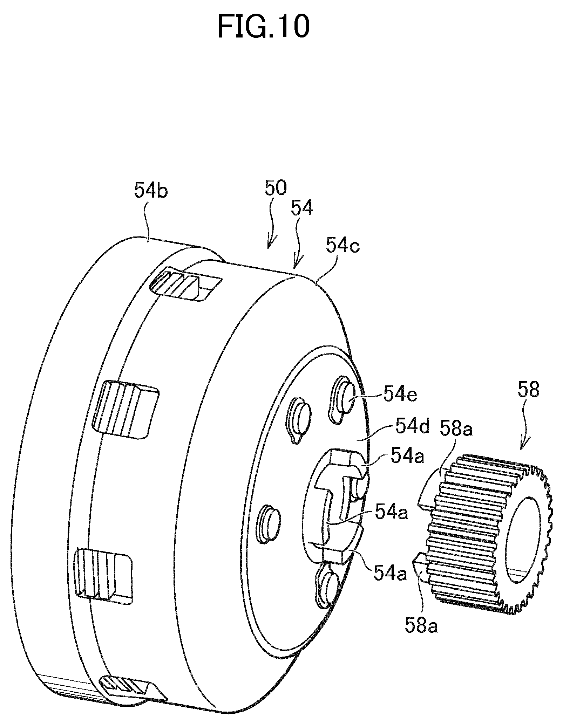

The first gear 58 on the drive shaft 11 has a diameter smaller than that of the clutch mechanism 50 (more specifically, the clutch housing 54). In the disclosed example of the electric motorcycle 1, the first gear 58 is engaged with the clutch mechanism 50 via engagement projecting portions 58a, 54a (see FIG. 10) that project in the shaft direction of the drive shaft 11, as is to be described later. In detail, the first gear 58 is engaged with the side portion 54d of the clutch housing 54 via the engagement projecting portions 58a, 54a (see FIG. 10). With the above, it is possible to make smaller the diameter of the first gear 58, compared to a structure in which, for example, the first gear 58 is engaged with the clutch housing 54 via a spline or a projecting portion that project in the diameter direction of the drive shaft 11. Accordingly, it is possible to ensure a sufficient reduction ratio, while shortening the distance between the drive shaft 11 and the intermediate shaft 14. Further, use of the engagement projecting portions 58a, 54a that project in the shaft direction of the drive shaft 11 makes it easier to ensure a space in the shaft direction between the clutch housing 54 and the first gear 58. Then, using the space, it is possible to arrange the bearing 63 supporting the intermediate shaft 14.

As shown in FIG. 7, the bearings 63, 64 that support the intermediate shaft 14 are located at the both respective ends of the intermediate shaft 14. The output shaft 13 is supported by bearings 65, 66. One bearing 66 is located at an end of the output shaft 13, while the other bearing 65 is located between the sprocket 13a and the fourth gear 13b.

The drive shaft 11 is supported by bearings 61, 62. In the disclosed example of the electric motorcycle 1, the bearing 61 is positioned between the clutch mechanism 50 and the electric motor 30. In detail, the bearing 61 is positioned between the first gear 58 and the electric motor 30. A spacer 15 is disposed between the bearing 61 and the first gear 58. The other bearing 62 is positioned outward from the electric motor 30 in the vehicle width direction (in the shaft direction of the drive shaft 11). The drive shaft 11 is supported only by two bearings 61, 62. In the example of the electric motorcycle 1, the clutch housing 54 and the first gear 58 are made of different materials, as is to be described later. With the above arrangement, it is possible to make the clutch housing 54, using material lighter (for example, aluminum) than that of the first gear 58, which makes it possible to reduce the weight of the clutch mechanism 50. This makes it easier to reduce the number of bearings that support the drive shaft 11. The number of bearings that support the drive shaft 11 is not limited to two, and a larger number of bearing may be used to support the drive shaft 11. For example, a bearing for supporting the drive shaft 11 may be provided on the side of the clutch mechanism 50.

As shown in FIG. 4, the driving unit case 40 has the case main body 41. The case main body 41 has a right half case section 41 R that constitutes the right half thereof and a left half case section 41 L that constitutes the left half thereof. The right half case section 41 R and the left half case section 41 L are fixed to each other in the vehicle width direction. In this embodiment, the driving unit case 40 comprises the case main body 41, the motor housing 33, and the clutch cover 43, and houses the above mentioned electric motor 30, clutch mechanism 50, drive shaft 11, intermediate shaft 14, and output shaft 13.

As shown in FIG. 7, in the example of the electric motorcycle 1, the bearings 61, 64, 66 are supported by the right half case section 41 R, that is, the half case section on the side of the electric motor 30. The bearings 63, 65 are supported by the left half case section 41 L, that is, the half case section on the side of the clutch mechanism 50.

The second gear 14a and the third gear 14b are disposed between the two bearings 63, 64 that support the intermediate shaft 14. Since this ensure a sufficient distance between the two bearings 63, 64 in the vehicle width direction, the two bearings 63, 64 are provided to two half case sections 41 R, 41 L, respectively, that are combined to each other in the vehicle width direction.

As shown in FIG. 7, each of the gears 58, 14a, 14b, 13b that constitute the speed reduction mechanism is positioned further rightward than the bearing 63 on the left side that supports the intermediate shaft 14. This makes it easier to support the bearing 63 by the left half case section 41 L without using a dedicated member for supporting the bearing 63.

As shown in FIG. 7, the second gear 14a on the intermediate shaft 14 is positioned closer to the clutch mechanism 50 from the third gear 14b on the intermediate shaft 14. With the above, it is possible to prevent the distance between the first gear 58 engaging with the second gear 14a and the clutch mechanism 50 in the shaft direction of the drive shaft 11 from becoming excessively long.

As shown in FIG. 7, the rear portion of the second gear 14a on the intermediate shaft 14 is positioned between the bearing 65 that supports the output shaft 13 and the fourth gear 13b on the output shaft 13. With the above, it is possible to prevent the distance between the output shaft 13 and the intermediate shaft 14 from becoming long, and also to ensure a sufficiently long distance between the two bearings 65, 66 that support the output shaft 13. This can ensure a sufficient strength for supporting the output shaft 13. The arrangement of the gears 14a, 14b on the intermediate shaft 14 is not limited to the example shown in FIG. 7. For example, the second gear 14a engaged with the first gear 58 on the drive shaft 11 may be disposed in a position closer to the electric motor 30 relative to the third gear 14b.

As shown in FIG. 4, the electric motorcycle 1 comprises a motor driving device 29. The motor driving device 29 supplies an electric power received from the battery 7 to the electric motor 30. In detail, the motor driving device 29 comprises an inverter, and converts an electric power received from the battery 7 from DC to AC before supplying to the electric motor 30. In the example of the electric motorcycle 1, the motor driving device 29 is disposed ahead of the electric motor 30 and the clutch mechanism 50. With the above, it is easier to cool the motor driving device 29 while the vehicle is running. Layout of the motor driving device 29 is not limited to the above described. For example, the motor driving device 29 may be disposed above the electric motor 30 and the clutch mechanism 50 and below the battery 7. Further, the motor driving device 29 may be disposed behind the battery 7 or below the seat 5.

In the example of the electric motorcycle 1, the motor driving device 29, in addition to the above mentioned electric motor 30, clutch mechanism 50, drive shaft 11, intermediate shaft 14, and output shaft 13, is disposed in the driving unit case 40. With the above, it is possible to shorten a wiring 28 that connects the motor driving device 29 and the electric motor 30 (see FIG. 4). As shown in FIG. 7, the driving unit case 40 has a first housing space S1 and a second housing space S2. The torque transmission mechanism that is made up of the clutch mechanism 50, the intermediate shaft 14, the output shaft 13, or the like is disposed in the first housing space S1. The electric motor 30 and the motor driving device 29 are disposed in the second housing space S2. The drive shaft 11 extends over the first housing space S1 and the second housing space S2. The first housing space S1 is made up of the case main body 41 and the clutch cover 43, and the second housing space S2 is made up of the case main body 41 and the motor housing 33.

The motor driving device 29 is disposed ahead of the electric motor 30 and the clutch mechanism 50. The case main body 41 has an opening 41 h that is open forward (see FIG. 4). The opening 41 h is rectangular, for example, as shown in FIG. 4. The motor driving device 29 is inserted into the opening 41 h, and fixed to the edge of the opening 41 h. The front surface of the motor driving device 29 is exposed forward from the driving unit case 40. With the above, it is possible to effectively cool the motor driving device 29 when wind hits on the front surface of the motor driving device 29 while the vehicle is running. A structure for mounting the motor driving device 29 is not limited to the above described. For example, the entire motor driving device 29 may be housed in the case main body 41.

As shown in FIGS. 7 and 8, the case main body 41 has wall portions 41 a, 41 b that define the first housing space S1 and the second housing space S2. Each wall portion 41 a, 41 b has no hole and no opening that penetrates the two housing spaces S1, S2 except a hole which the drive shaft 11 penetrates. With the above, while oil is supplied to the mechanism and bearings disposed in the first housing space S1, it is possible to prevent the oil from touching the electric motor 30 and the motor driving device 29 disposed in the second housing space S2. A seal member 12 is provided in the hole where the drive shaft 11 passes through. As shown in FIG. 8, a drain 41c for discharging oil and an opening 41 d via which an operator checks the oil by viewing may be formed in the first housing space S1. The opening 41 d may be closed by a cap 44.

As shown in FIG. 7, the second housing space S2 has a motor housing space S2a where the electric motor 30 is disposed and a driving device housing space S2b where the motor driving device 29 is disposed. The motor housing space S2a is made using the motor housing 33, and the driving device housing space S2b is made using the case main body 41.

As shown in FIG. 5, the driving unit case 40 has an opening 41e for communication between the motor housing space S2a and the driving device housing space S2b. The opening 41e is formed on the case main body 41. In the example of the electric motorcycle 1, the opening 41 e is formed on the right half case section 41 R. A part of the electric motor 30 is exposed toward the driving device housing space S2b through the opening 41 e. In the disclosed example of the electric motorcycle 1, a part of the electric motor 30 on the side of the middle C1 in the vehicle width direction, more specifically, the upper portion 30a of the electric motor 30 (see FIG. 4) is exposed toward the driving device housing space S2b. Using the opening 41e, the electric motor 30 and the motor driving device 29 are electrically connected to each other. As shown in FIG. 4, a terminal pedestal 27 is disposed inward from the electric motor 30 in the vehicle width direction, that is, disposed between the electric motor 30 and the clutch mechanism 50. A terminal of the wiring 28 is fixed on the terminal pedestal 27 (the terminal pedestal 27 not shown in FIGS. 7 and 8). The position of the opening 41e is not limited to the example shown in FIG. 5. For example, the opening may be formed on a wall portion 41i that covers the upper side of the electric motor 30 (see FIG. 4). Using the opening, the electric motor 30 and the motor driving device 29 may be electrically connected to each other.

As described above, the stator 32 is fixed inside the motor housing 33. As shown in FIG. 7, the motor housing 33 is positioned outward from the case main body 41 in the vehicle width direction. In the disclosed example of the electric motorcycle 1, the motor housing 33 is positioned rightward from the case main body 41. The motor housing 33 is fixed to the case main body 41. In detail, the motor housing 33 is open toward the middle C1 in the vehicle width direction (in the example of the electric motorcycle 1, the motor housing 33 is open leftward). The edge 33a of the opening of the motor housing 33 is in contact with the case main body 41, and directly fixed to the case main body 41 (in the example of the electric motorcycle 1, the edge 33a of the opening of the motor housing 33 is directly fixed to the right half case section 41 R). When the motor housing 33 is fixed to the case main body 41 as described above, it is possible to reduce the width of the driving unit case 40 in the vehicle width direction, compared to a structure in which another member is disposed between the edge 33a of the motor housing 33 and the case main body 41. In the disclosed example of the electric motorcycle 1, the motor housing 33 is fixed to the right half case section 41 R by a plurality of bolts 73 disposed surrounding the drive shaft 11.

A bolt 73 is inserted into fixing holes formed on the motor housing 33 and the right half case section 41 R from the inside of the case main body 41. In this structure, it is easier to employ an electric motor 30 having a larger diameter, compared to a structure in which, for example, the bolt 73 is inserted into a mounting hole from the outside of the case main body 41. A structure that fixes the motor housing 33 is not limited to the example shown in FIG. 7. For example, the bolt 73 may be inserted into the fixing hole of the motor housing 33 from the outside of the case main body 41.

As shown in FIG. 8, the second housing space S2 of the driving unit case 40 further has a housing space S2c that is positioned above the electric motor 30 and the clutch mechanism 50. Various electric equipment, for example, is disposed in the housing space S2c (the housing space S2c will be hereinafter referred to as an "electric equipment housing space"). The electric equipment comprises a converter for lowering the voltage of the electric power of the battery 7 before supplying to the battery 9, a relay for controlling power supply from the battery 7, or the like. The electric equipment housing space S2c is made up of the case main body 41. That is, the case main body 41 has a circumferential wall portion 41f that defines the electric equipment housing space S2c. The electric equipment housing space S2c may be provided above the intermediate shaft 14 and the output shaft 13 (see FIG. 9). Preferably, the width of the electric equipment housing space S2c is larger than that of the part of the case main body 41 where the intermediate shaft 14 and the output shaft 13 are disposed. A tray 71 supporting the electric equipment may be disposed inside the electric equipment housing space S2c. A component that is disposed in the housing space S2c is not limited to electric equipment. The upper edge 41g of the circumferential wall portion 41f (see FIG. 4) is fixed to the battery case 20.

As shown in FIG. 3, the motor driving device 29 overlaps with a part (a part toward the middle C1 in the vehicle width direction) of the electric motor 30 and a part of the clutch mechanism 50 (a part toward the middle C1 in the vehicle width direction) in a front view of the vehicle body. With the above, it is possible to shorten the distance between the electric motor 30 and the motor driving device 29, and thus shorten the wiring 28 connecting these. Further, as the motor driving device 29 receives more wind when the vehicle is running, it is possible to effectively cool the motor driving device 29. The motor driving device 29 may overlap with the entire electric motor 30 in a front view of the vehicle body. Further, the motor driving device 29 may overlap with the entire clutch mechanism 50 in a front view of the vehicle body.

The electric motor 30, clutch mechanism 50, drive shaft 11, intermediate shaft 14, output shaft 13, and motor driving device 29 are disposed below the battery case 20. That is, the driving unit case 40 is disposed below the battery case 20. As shown in FIG. 2, the motor driving device 29 is positioned further rearward than the front end 20a of the battery case 20. With the above, water, sand, pebbles or the like that are splashed by the front wheel 2 while a vehicle is running can be readily prevented from hitting on the motor driving device 29.

As shown in FIG. 3, the position of the lower edge 29a of the motor driving device 29 is higher than the position of the lower edge 40c of the part of the driving unit case 40 in which the electric motor 30 and the clutch mechanism 50 are housed in a front view of the vehicle body. With the above, water, sand, pebbles or the like splashed by the front wheel 2 when a vehicle is running can be more effectively prevented from hitting on the motor driving device 29.

As shown in FIG. 2, the output shaft 13 is positioned further forward than the rear end 20b of the battery case 20. With the above, it is possible to reduce the size of the driving unit case 40, and to make it easier to set appropriate a wheel base, that is, the distance between the front wheel 2 and the rear wheel 6.

As described above, the battery case 20 is disposed below the seat 5. As shown in FIG. 3, the width W3 of the battery case 20 in the vehicle width direction is smaller than the width W2 of the driving unit case 40 in the vehicle width direction. With the above, when a driver straddles the seat 5, the battery case 20 can be easily positioned between his/her both legs. In this description, the width W3 of the battery case 20 means the width of the upper portion of the battery case 20. Further, the width W2 of the driving unit case 40 is the width of the part of the driving unit case 40 in which the electric motor 30 and the clutch mechanism 50 are disposed. That is, the width W2 of the driving unit case 40 is the distance between the end portion 33d of the motor housing 33 in the vehicle width direction and the end portion 43d of the clutch cover 43 in the vehicle width direction.

As described above, the clutch mechanism 50 and the first gear 58 are disposed on the drive shaft 11. The first gear 58 and the clutch housing 54 are formed individually. The first gear 58, the clutch housing 54, and the first clutch plate 53 integrally rotate, and can rotate relative to the drive shaft 11. FIG. 10 is a perspective view of the clutch mechanism 50 and the first gear 58. Engagement projecting portions 58a, 54a that project in the shaft direction of the drive shaft 11 are formed on at least one of the first gear 58 and the clutch housing 54. The first gear 58 and the clutch housing 54 are engaged with each other through the engagement projecting portions 58a, 54a so that the first gear 58 and the clutch housing 54 integrally rotate. With the above, it is possible to make smaller the diameter of the first gear 58, compared to a structure in which the first gear 58 and the clutch housing 54 are engaged with each other by utilizing a spline or a projecting portion projecting in the radial direction of the drive shaft 11. As a result, it is possible to readily obtain a sufficient reduction ratio while shortening the distance from the drive shaft 11 to the intermediate shaft 14 and the output shaft 13.

In the example of the electric motorcycle 1, as shown in FIG. 10, the first gear 58 has a plurality of engagement projecting portions 58a that project towards the clutch mechanism 50 in the shaft direction. The plurality of engagement projecting portions 58a are formed surrounding the drive shaft 11 at an interval. The clutch housing 54 has a plurality of engagement projecting portions 54a projecting toward the first gear 58 in the shaft direction. The plurality of engagement projecting portions 54a are formed surrounding the drive shaft 11 at an interval, and engaged with the respective engagement projecting portions 58a of the first gear 58. That is, each engagement projecting portion 54a is inserted into between two adjacent engagement projecting portions 58a.

The first gear 58 and the clutch housing 54 may be made of different materials. With the above, it is possible to reduce the weight of the clutch mechanism 50 while ensuring sufficient strength of the engagement structure for the first gear 58 and the clutch housing 54. In the example of the electric motorcycle 1, the clutch housing 54 has a main body 54c having a barrel portion 54b that surrounds the first clutch plate 53, and a side portion 54d fixed to the side surface (the surface on the side of the first gear 58) of the main body 54c by a fixture 54e such as a bolt, a rivet, or the like. The above-mentioned engagement projecting portion 54a is formed on the side portion 54d. The main body 54c is made of material (aluminum) lighter than the material (for example, iron) of the first gear 58. The side portion 54d may be made of the material same as that of the first gear 58.

As described above, in the electric motorcycle 1, the electric motor 30 is disposed rightward from the middle C1 in the vehicle width direction. Meanwhile, the clutch mechanism 50 and the sprocket 13a are disposed leftward from the middle C1 in the vehicle width direction. With this layout, interference is not caused between the electric motor 30 and the sprocket 13a even when an electric motor 30 having a large diameter is used. This makes it easier to increase an output torque of the electric motor 30. Further, the electric motor 30 and the clutch mechanism 50 are both disposed on the drive shaft 11. With the above, a smaller torque is inputted to the clutch mechanism 50, compared to a structure in which, for example, a torque of an electric motor is inputted to a clutch mechanism via a speed reduction mechanism. As a result, it is possible to reduce the size of the clutch mechanism 50. Accordingly, it is possible to shorten the distance between the drive shaft 11 and the output shaft 13, and thus to reduce the size of the driving unit case 40. Further, the clutch mechanism 50 is connected to the clutch lever 3a so that the state of engagement of the clutch mechanism 50 is changed in response to an operation of the clutch lever 3a. With the above, it is possible to increase the degree of freedom in torque transmission control by a driver.

It will be appreciated that present invention is not limited to the above described electric motorcycle 1 and may be modified in various manners.

For example, the electric motor 30 may be disposed leftward from the middle C1 in the vehicle width direction, and the clutch mechanism 50 and the sprocket 13a may be disposed rightward from the middle C1 in the vehicle width direction.

Although the case main body 41 that constitutes the driving unit case 40 is made up of two members, that is, the right half case section 41 R and the left half case section 41 L, the case main body 41 may additionally comprise a member for supporting a bearing, for example, in addition to the half case sections 41 R, 41 L.

It will be appreciated that the embodiment of the present invention hereinbefore described is given by way of example only, and is not intended to limit the scope of the invention in any way.

It will be appreciated that any of the features of any of the disclosed embodiments may be provided in combination with any of the features of the statements of invention given in the Summary of Invention and/or any of the other disclosed embodiments either individually or in combination.

It will be appreciated that the term straddle-type vehicle, or electric vehicle used herein, and as used in the art, is meant to include at least the following terms also used in the art:
straddled vehicle or electric vehicle, saddle-straddling type vehicle or electric vehicle, and includes: motorcycles and motorbikes as well as motor tricycles, quad bikes and All Terrain Vehicles (ATVs), scooters, mopeds and snowmobiles.

## Claims

1. A straddle-type electric vehicle, such as an electric motorcycle (1) comprising:
a clutch operation member for operation by a driver or rider;
a drive shaft;
an electric motor (30) mounted on the drive shaft, disposed in a first direction from a middle in a vehicle width direction;
a clutch mechanism (50) mounted on the drive shaft, disposed in a second direction opposite to the first direction from the middle in the vehicle width direction, connected to the clutch operation member, and configured to change a state of engagement of the clutch mechanism through an operation of the clutch operation member by the driver or rider;
a first gear(58) mounted on the drive shaft and configured to receive a torque of the electric motor through the clutch mechanism;
an output shaft (13) configured to receive the torque of the electric motor through the first gear on the drive shaft; and
an output member (13a) mounted on the output shaft, disposed in the second direction from the middle in the vehicle width direction, and linked to a driving wheel of the vehicle through a torque transmission member (19).

2. The straddle-type electric vehicle according to claim 1, wherein a diameter of a motor housing (33) that houses the electric motor is larger than a diameter of a clutch cover (43) that houses the clutch mechanism.

3. The straddle-type electric vehicle according to claim 1, wherein an intermediate shaft (14) that constitutes a speed reduction mechanism is disposed between the drive shaft and the output shaft.

4. The straddle-type electric vehicle according to claim 3, wherein
the intermediate shaft is supported by at least two bearings, and
the at least two bearings are positioned between the electric motor and the clutch mechanism in the vehicle width direction wherein optionally
at least a part of the two bearings overlaps with both of the electric motor and the clutch mechanism in a side view of a vehicle body.

5. The straddle-type electric vehicle according to claim 3, wherein
the intermediate shaft comprises a second gear (14a)that is directly or indirectly engaged with the first gear on the drive shaft, and a third gear (14b) that has a diameter smaller than that of the second gear and is directly or indirectly engaged with a gear on the output shaft,
the intermediate shaft is supported by two bearings, and
the second gear and the third gear on the intermediate shaft are positioned between the two bearings.

6. The straddle-type electric vehicle according to any preceding claim, wherein at least a part of the output member overlaps with a motor housing that stores the electric motor in a side view of a vehicle body.

7. The straddle-type electric vehicle according to any preceding claim, further comprising a motor driving device having an inverter and configured to supply an electric power to the electric motor, wherein
the motor driving device is disposed ahead of the electric motor and the clutch mechanism, and overlaps with at least a part of the electric motor and at least a part of the clutch mechanism in a front view of a vehicle body.

8. The straddle-type electric vehicle according to claim 7, further comprising:
a battery (7) configured to store an electric power to be supplied to the electric motor, and
a battery case (20) that stores the battery, wherein
the drive shaft, the electric motor, the clutch mechanism, the output shaft, and the motor driving device are disposed below the battery case,
the motor driving device is positioned further rearward than a front end of the battery case, and
the output shaft is positioned further forward than a rear end of the battery case.

9. The straddle-type electric vehicle according to any preceding claim, further comprising:
a/the battery (7) configured to store an electric power to be supplied to the electric motor, and
a/the battery case (20) that stores the battery, wherein
the drive shaft, the electric motor, the clutch mechanism, and the output shaft are disposed below the battery case,
the drive shaft, the electric motor, the clutch mechanism, and the output shaft are disposed in the driving unit case, and
a width of the battery case is smaller than a width of the driving unit case at a position of the drive shaft.

10. The straddle-type electric vehicle according to any preceding claim, further comprising:
a motor driving device (29) comprising an inverter and configured to supply an electric power to the electric motor, wherein
the drive shaft, the electric motor, the clutch mechanism, the output shaft and the motor driving device are disposed in a driving unit case (40),
the driving unit case has a first housing space (S1) in which the clutch mechanism and the output shaft are disposed and a second housing space (S2) in which the electric motor and the motor driving device are disposed, and
the first housing space and the second housing space are defined by a wall portion (41 a,41 b) formed in the driving unit case.

11. The straddle-type electric vehicle according to claim 10, wherein
the second housing space (S2a) has a motor housing space in which the electric motor is disposed and a driving device housing space in which the motor driving device is disposed, and
the driving unit case has an opening formed on a part thereof for communication between the driving device housing space and the motor housing space.

12. The straddle-type electric vehicle according to any preceding claim, wherein
the drive shaft, the electric motor, the clutch mechanism, and the output shaft are disposed in a driving unit case (40),
the driving unit case comprises a case main body and a motor housing that has a motor housing space for housing the electric motor, and
the motor housing is fixed to the case main body.

13. The straddle-type electric vehicle according to any preceding claim, wherein the clutch mechanism comprises:
a plurality of first clutch plates (53) that rotate integrally with the drive shaft,
a plurality of second clutch plates (52) that are alternately disposed with the plurality of first clutch plates and rotates integrally with the first gear on the drive shaft, and
a pressure plate (57) that is movable in a shaft direction of the drive shaft in response to an operation of the clutch operation member by a driver, and presses the plurality of first clutch plates and the plurality of second clutch plates to each other.

14. The straddle-type electric vehicle according to any preceding claim, wherein at least one of the first gear on the drive shaft and the clutch mechanism has an engagement portion that projects in a shaft direction of the drive shaft and is engaged with the other of the first gear and the clutch mechanism.

15. The straddle-type electric vehicle according to any preceding claim, wherein the drive shaft has a fan (72) mounted thereon for cooling the electric motor.
